# EUROPÄISCHE PATENTANMELDUNG

(11) **EP 2 088 423 A1**
(43) Veröffentlichungstag der Anmeldung: **12.08.2009**
(21) Anmeldenummer: 09000303.9
(22) Anmeldetag: 12.01.2009
(51) Int. Cl.: G01N 21/77, G02B 1/04

(54) **Wellenleiterkern und Biosensor**

(30) Priorität: 07.02.2008 DE 102008007823
(71) Anmelder: Fraunhofer-Gesellschaft zur Förderung der angewandten Forschung e.V., 80686 München (DE)
(72) Erfinder: Foerster, Thilo, 80805 Muenchen (DE); Strohhoefer, Christof, 81369 Muenchen (DE)
(74) Vertreter: Schenk, Markus

(57) **Zusammenfassung**

Ein Wellenleiterkern (110) aus Hydrogel dient als Immobilisierungsmatrix, in die Rezeptormoleküle (120) eingebettet sind.

## Beschreibung

Die vorliegende Erfindung bezieht sich auf einen Wellenleiterkern, auf einen Wellenleiter und auf einen Biosensor mit einem Wellenleiter und insbesondere auf eine optische Anordnung zur Messung von biologischen, biochemischen oder chemischen Parametern.

Zur Wahrnehmung messtechnischer Aufgaben an und in biologischen Flüssigkeiten, wie Wasserproben oder Lebensmittel können auf biologischen Rezeptormolekülen basierende Detektionsmethoden zum Einsatz kommen. Beispielsweise besteht eine messtechnische Aufgabe darin, kleinste Mengen eines Analyten in einer Lösung oder einer Probe festzustellen, was enorme Anforderungen an die Messtechnik stellt. Bei diesen Verfahren stellen Rezeptormoleküle die Sensitivität und die Selektivität der Detektion (eines Analyten oder einer Analytkonzentration) sicher, indem sie mit dem Analyten reagieren und beispielsweise diesen an sich binden (z. B. über eine Antikörper-Antigenwechselwirkung). Um diese Reaktion festzustellen, ist eine Umwandlung in ein verarbeitbares (optisches oder elektrisches) Signal erforderlich. Das kann beispielsweise mit Hilfe eines physikalischen Signalwandlers oder Signalumformers - dem sogenannten Transducer - erfolgen. Ein entsprechender Biosensor arbeitet somit auf dem Prinzip, dass zunächst eine biologische oder biochemische Reaktion erfolgt und anschließend diese Reaktion in einem messbaren Signal umgewandelt wird.

Eine große Herausforderung bei der Entwicklung von Biosensoren besteht darin, die biologischen Rezeptormoleküle und den physikalischen Signalwandler so zu koppeln, dass ein möglichst hoher und effizienter Signalübertrag zwischen beiden stattfindet. Das bedeutet beispielsweise, dass bereits kleinste Mengen der zu detektierenden Substanz (Analyten) (z. B bis zu 10⁻¹³ mol/Liter für Tumormarker im Blutserum oder zwischen 1 ... 30 mmol/Liter für Glukosekonzentrationen) zu einem messbaren Signal führen.

Um eine Reaktion zwischen den Rezeptormolekülen und dem in der Probe festzustellenden Analyten zu bewirken, werden zunächst die Rezeptormoleküle immobilisiert. Für die Immobilisierung von Biomolekülen können beispielsweise Hydro- und Aerogele in der Biosensorik und Chromatographie verwendet werden. Bekannte optische Transducer beruhen andererseits auf einem, durch optische Elemente geformten (Freistrahl) Licht und außerdem auf der Führung von Licht durch einen optischen Wellenleiter. Das durch die optischen Elemente geformte Licht kann beispielsweise für Transmissionsmessungen genutzt werden oder aber entlang von Strahlengängen ähnlich der Mikroskopie oder Fluoreszenzmikroskopie geleitet werden. Der optische Wellenleiter kann beispielsweise zwei Funktionen erfüllen:
(1) Transport des Lichts an die Stelle, an der die Analyse stattfindet oder
(2) Bereitstellung eines evaneszenten elektromagnetischen Feldes an der Oberfläche des Wellenleiters, so dass das elektromagnetische Feld mit den dort befindlichen Biomolekülen oder dort ablaufende Reaktionen wechselwirkt.

Die Anwesenheit von Analytmolekülen kann optisch beispielsweise wie folgt nachgewiesen werden:
(i) durch eine Wechselwirkung mit dielektrischen Eigenschaften der Moleküle auf der Oberfläche des Wellenleiters und einem Nachweis einer dadurch entstandenen Phasenverschiebung in einem optischen Interferrometer,
(ii) über eine selektive Auskopplung bestimmter Wellenleitermoden aus dem Wellenleiter bedingt durch den Brechungsindex von Analytmolekülen,
(iii) über eine spezifische Absorption eines Moleküls (z. B. kann sich eine Wechselwirkung eines Analytmoleküls mit einem Rezeptormolekül in einem Ausbilden einer spezifischen Spektrallinie äußern),
(iv) über eine Fluoreszenz der Moleküle oder an den Molekülen angebrachten Marker-Fluorophoren,
(v) über eine Fluoreszenzlöschung als Folge spezifischer Reaktionen (beispielsweise kann eine ausgewählte Fluoreszenz erlöschen, wenn die Rezeptormoleküle mit den Analytmolekülen wechselwirken bzw. diese an sich binden),
(vi) über einen resonanten Energietransfer zwischen fluoreszierenden Molekülen (FRET) und dessen Veränderungen in Abhängigkeit von der Analytkonzentration.

Den optischen Wellenleiter-Transducern ist gemein, dass sie entweder teilweise mit ungeführtem Licht und den daraus resultierenden Diffraktions- und Apertureffekten (Beugungs-und Blendeneffekten) bei der Wechselwirkung mit dem zu untersuchenden Medium auszukommen haben oder nur ein geringer Teil des Lichts (das evanescente Feld) zur Wechselwirkung mit den Analyt- und/oder Rezeptormolekülen kommt. Um letzteres Problem zu beheben, werden vor allem Materialien mit sehr hohem Brechungsindex (z. B. Ta₂O₅, TiO₂) verwendet, von denen sehr dünne und gut kontrollierte Schichten in aufwendigen, Reinraum-basierten Prozessen hergestellt werden können. Die dünnen Schichten liegen beispielsweise unterhalb von 100 nm oder etwas darüber.

Aus den oben genannten Gründen ist die Anzahl von Rezeptormolekülen, die am Nachweis von Molekülen mitwirken können, stark begrenzt. Freistrahl optische Lösungen sind zwar sehr effizient, leiden aber unter dem hohen Platzbedarf guter strahlformender Elemente (z.B. Linsen, Spiegel, etc.). Dieses Problem wird auch durch den Einsatz von Mikrolinsen nur wenig verbessert, da die Mikrolinsen das vermessbare Probenvolumen wiederum stark einschränken. Gerade im Bereich von mikrofluidischen Biosensoren und Biochips aber auch im Bereich langzeittauglicher Echtzeitsensoren, stellen die aufgeführten Punkte wesentliche Einschränkungen dar.

In DE 103 50 526 ist ferner ein optischer Wellenleitersensor offenbart, bei dem die Rezeptormoleküle an einer Oberfläche oder Grenzfläche des Wellenleiters immobilisiert sind und das evaneszente Feld zur Detektion genutzt wird. In US 5,938,595 wird Hydrogel als Immobilisierungsmatrix genutzt, das an einem optischen Ausgang einer optischen Faser als Oberflächenschicht angeordnet ist. In beiden Fällen ist die Wechselwirkungsregion zwischen Licht und Rezeptormolekülen und somit die Sensitivität jedoch nur beschränkt.

Ausgehend von diesem Stand der Technik besteht die Aufgabe der vorliegenden Erfindung darin, einen Wellenleiterkern, einen Wellenleiter und einen Biosensor zu schaffen, bei der eine große Anzahl von Rezeptormolekülen am Analytnachweis mitwirken und die darüber hinaus einfach und kostengünstig herstellbar ist.

Diese Aufgabe wird durch einen Wellenleiterkern nach Anspruch 1, einer Wellenleiteranordnung nach Anspruch 10, einem Wellenleiter nach Anspruch 14, einen Optischen Sensor nach Anspruch 16 und ein Verfahren zum Detektieren eines Analyten nach Anspruch 23 gelöst.

Der Kerngedanke der vorliegenden Erfindung besteht darin, einen Wellenleiter nicht nur zum Zu- oder Abführen eines Lichtsignals zu nutzen, sondern den Wellenleiter gleichzeitig als Immobilisierungsmatrix für die Rezeptormoleküle auszulegen und als Immobilisierungsmatrix Hydrogel zu verwenden. Außerdem kann ein Biosensor einen Wellenleiter oder Wellenleiterkern aus Hydrogel und eine Einrichtung zum Erfassen einer elektromagnetischen Strahlung, die den Wellenleiter verlässt, aufweisen.

Somit umfassen Ausführungsbeispiele der vorliegenden Erfindung den Einsatz von Hydrogelen in der funktionellen Kombination als Immobilisierungsmatrix für biologische Rezeptormoleküle und gleichzeitig als optische Wellenleiter oder zumindest als Wellenleiterkern. Dadurch wird es möglich, einen hocheffizienten Einsatz von Licht am Ort, an dem die Rezeptormoleküle immobilisiert sind, zu realisieren. Durch eine geeignete Dimensionierung ist es möglich, dass eine maximale Anzahl von Rezeptormolekülen am Analytnachweis mitwirken. Beispielsweise kann die Länge des Wellenleiters in Hauptwellenausbreitungsrichtung zumindest dem Fünffachen oder dem Dreifachen der Höhen bzw. Breite des Wellenleiters entsprechen und diese Relation kann beispielsweise über die gesamte Länge des Wellenleiters gültig sein, so dass der Wellenleiter beispielsweise eine längliche Ausdehnung aufweist. Als Hauptwellenausbreitungsrichtung kann dabei jene Richtung sein, in der ein Maximum oder zumindest 50% oder zumindest 70% der Strahlung propagiert. Im folgenden wird die Hauptwellenausbreitungsrichtung auch kurz als Wellenausbreitungsrichtung bezeichnet.

Dies Konzept ist insbesondere für solche Anwendungen von Interesse, in denen keine leistungsstarken Energiequellen zur Verfügung stehen. Ein Beispiel dafür sind implantierte Biosensoren, deren Zuverlässigkeit darauf beruht, dass die zur Verfügung stehende Energiemenge (Licht) möglichst effizient genutzt wird. Eine ineffiziente Energieausnutzung würde hier nicht nur die Lebensdauer des Energiespeichers (z.B. eine Batterie) einschränken, sondern auch dazu führen, dass unnötigerweise Wärme produziert wird. Weiterhin kann durch die Führung des Lichts in der Immobilisierungsmatrix die Wechselwirkungszone zwischen der zu analysierenden Flüssigkeit und Biosensor fast unbeschränkt ausgedehnt werden. Dies kann beispielsweise dadurch erreicht werden, dass ein Hydrogel verwendet wird, das transparent für die verwendete Wellenlänge ist und darüber hinaus einen höheren Brechungsindex aufweist als der Brechungsindex des zu untersuchenden Mediums oder der zu untersuchenden Flüssigkeit (Umgebung) oder eines umgebenen Wellenleitermantels.

Weiterhin ist es möglich, dass der Biosensor eine optische Anbindung an die Außenwelt (Umgebung) aufweist - beispielsweise über einen optischen Eingang, der beispielsweise (Mikro-) Linsen aufweisen kann, oder über eine Anschlussmöglichkeit eines spezifischen Lasers, einer LED, einer anderen nichtkohärenten Strahlungsquelle oder einer anderen Lichtquelle.

Hydrogele weisen typischerweise Polymere auf, deren Moleküle chemisch oder physikalisch zu einem dreidimensionalen Netzwerk verknüpft sind, wobei kovalente und ionische Bindungen vorliegen können oder aber auch ein Verschlaufen der Polymerketten zu einem physikalischen Halt der Polymere führen kann. Durch eingebaute hydrophile Polymerkomponenten können sie beispielsweise in Wasser unter beträchtlicher Volumenzunahme aufquellen, ohne jedoch ihre stoffliche Zusammenhalte zu verlieren. Hydrogele können somit als ein Polymernetzwerk aufgefasst werden, dessen Poren mit einer umgebenden Flüssigkeit gefüllt werden. Dies sorgt dafür, dass - solange der Brechungsindex des Polymers einen höheren Brechungsindex als die umgebende Flüssigkeit aufweist - ein Brechungsindexunterschied zwischen dem Hydrogel und der umgebenden Flüssigkeit besteht, wobei das Hydrogel den höheren Brechungsindex aufweist.

Alternativ ist es möglich, das Hydrogel in ein Material einzubetten, dessen Brechungsindex unterhalb des Brechungsindex des mit der Flüssigkeit gefüllten Hydrogels liegt und dadurch als Wellenleitermantel fungieren kann. In diesem Fall stellt das gefüllte Hydrogel ein Wellenleiterkern dar, der das Licht über eine auftretende Totalreflexion leitet. Für den Wellenleitermantel kommen beispielsweise spezielle Materialien, wie fluorierte Polymere in Frage. Allerdings kann der Wellenleitermantel auch ein (anderes) Hydrogel aufweisen, solange dessen Brechungsindex kleiner ist als der des Hydrogels im Wellenleiterkern.

Das Hydrogel kann beispielsweise freischwebend in der umgebenden Flüssigkeit angeordnet sein und an seinen Enden aufgelegt oder aufgehängt sein. Auf diese Weise stell ein Großteil des Hydrogels zwischen den Auflagepunkten einen optischen Wellenleiter dar. Die Form des Hydrogel-Wellenleiters oder des Wellenleiterkerns kann dabei vielfältig sein, möglich ist z.B. eine quaderförmig oder zylinderförmige Ausgestaltung.

Ebenfalls möglich ist eine kugelförmige, Scheiben- oder Sichelförmige Ausgestaltung. Beispielsweise kann bei diesen Ausgestaltungen des Hydrogels das Licht tangential möglichst dicht am Rand eingestrahlt werden (z.B. mittels eins Mikrospiegels), so dass sich das Licht durch Mehrfachreflexionen entlang des runden Randes ausbreitet. Gegebenfalls kann das Licht ebenfalls tangential durch einen Detektor wiederum erfasst werden oder aber es breitet sich auf unbestimmte Zeit in der beispielhaften Kugel aus - z.B. bis es infolge von auftretender Fluoreszenz "aufgebraucht" ist.

Bei weiteren Ausführungsbeispielen des Wellenleiters ist das Hydrogel als eine Schicht auf einen dünnen transparenten Träger angeordnet, wobei der dünne transparente Träger beispielsweise Silikatglas aufweisen kann. In einer flüssigen Umgebung fungiert diese Anordnung dann als Wellenleiter. Bei weiteren Ausführungsbeispielen kann eine Einkopplung von Licht in den Wellenleiter über einen Freistrahl oder ein optisches Lichtleitkabel erfolgen, wobei das Lichtleitkabel (optische Glasfaser, optische Polymerfaser, mehrsträngiger Lichtleiter, etc.) in das Hydrogel eingeführt werden kann, und somit einen perfekten optischen Kontakt herstellt. Vorzugsweise wird dabei das Lichtleitkabel so weit in das Hydrogel eingeführt, dass sein Ende (an dem das optische Licht in das Hydrogel eingekoppelt wird) über den ersten Auflagepunkt, mit dem das Hydrogel fixiert wird, hinausragt. Auf diese Weise kann an den Auflagepunkten kein Licht aus dem Hydrogel-Wellenleiter auskoppeln.

Es ist beispielsweise ferner möglich, dass das Licht im Wellenleiter auf der in Wellenausbreitungsrichtung gegenüberliegenden Seite wieder mit einem Lichtleitkabel aufgefangen wird. Dies ist jedoch optional und insbesondere bei einigen Anordnungen sinnvoll (beispielsweise, um eine Absorption zu messen), bei anderen Anordnungen jedoch, wie beispielsweise bei einer Fluoreszenzanregung, kann auf das Auffangen des durchgeleiteten Lichts verzichtet werden.

Bei einem weiteren Ausführungsbeispiel wird insbesondere das Streu- oder Fluoreszenzlicht zur Detektion einer Analytkonzentration in dem Medium genutzt, wobei die Positionierung eines Photodetektors zur Analyse senkrecht zur Wellenausbreitungsrichtung erfolgt. Da ein sehr geringer Teil von dem beispielhaften Fluoreszenzlicht im Hydrogel geleitet wird, ist eine Anordnung bevorzugt, bei der die Messung der Fluoreszenz oder der FRET senkrecht zum Strahlengang des Lichts im Wellenleiter erfolgt.

Ausführungsbeispiele der vorliegenden Erfindung umfassen ebenfalls ein Verfahren zum Detektieren eines Analyten in dem Medium, wobei das Verfahren ein Kontaktieren eines Wellenleiters mit dem Medium, ein Erfassen von elektromagnetischer Strahlung, die den Wellenleiter verlässt, und ein Bestimmen einer Analytkonzentration in dem Medium aus dem Spektrum oder der Intensität der erfassten elektromagnetischen Strahlung umfasst. Bei dem erfindungsgemäßen Verfahren weist der Wellenleiter ebenfalls Hydrogel, das gleichzeitig als Immobilierungsmatrix für Rezeptormoleküle dient, auf.

In der Regel weist ein Wellenleiter einen Kern und einen Mantel auf, wobei der Brechungsindex des Kerns höher ist als der Brechungsindex des Mantels. Bei Ausführungsbeispielen dient entweder die Flüssigkeit (Medium), in der sich das Hydrogel befindet, als Mantelmaterial. Dies bedeutet, dass nicht der gesamte Wellenleiter aus Hydrogel besteht. Der Wellenleiter kann prinzipiell auch aus einem Hydrogel als Kern und einem z.B. Polymermaterial als Mantel aufgebaut sein. Alternativ könnte der Kern aus einem festen Material und der Mantel aus Hydrogel (mit immobilisierten Biomolekülen oder Rezeptormolekülen) aufgebaut sein. Relevant ist das Szenario, dass der Kern des Wellenleiters aus Hydrogel mit einem Brechungsindex n1, und der Mantel aus einem Hydrogel mit Brechungsindex n2<n1 besteht. Damit bleiben alle Vorteile der Anordnung bestehen.

Ausführungsbeispiele der vorliegenden Erfindung werden nachfolgend Bezug nehmend auf die beiliegenden Zeichnungen näher erläutert. Es zeigen:
- Fig. 1: eine Raumansicht des Wellenleiters nach ei- nem Ausführungsbeispiel der vorliegenden Er- findung;
- Fig. 2a, b: Querschnittsansichten des Wellenleiters mit eingezeichnetem Strahlengang;
- Fig. 3a: eine Raumansicht des Wellenleiters mit Trä- gerelementen;
- Fig. 3b: eine Raumansicht des Wellenleiters mit Trä- gerelementen und Lichtleitkabeln;
- Fig. 3c: eine Querschnittsansicht zur Veranschauli- chung eines durch ein Lichtleitkabel direkt beleuchtbarer Teil des Wellenleiters;
- Fig. 4: eine Querschnittsansicht des Wellenleiters und eines senkrecht zur Ausbreitungsrichtung angeordneten Photodetektors;
- Fig. 5: eine Querschnittsansicht eines Wellenleiters gemäß einem weiteren Ausführungsbeispiel der vorliegenden Erfindung; und
- Fig. 6: eine Querschnittsansicht eines Biosensors mit einem erfindungsgemäßen Wellenleiter.

Bezüglich der nachfolgenden Beschreibung sollte beachtet werden, dass bei den unterschiedlichen Ausführungsbeispielen gleiche oder gleichwirkende Funktionselemente gleiche Bezugszeichen aufweisen und somit die Beschreibung dieser Funktionselemente in den verschiedenen, der nachfolgend dargestellten Ausführungsbeispiele, untereinander austauschbar sind.

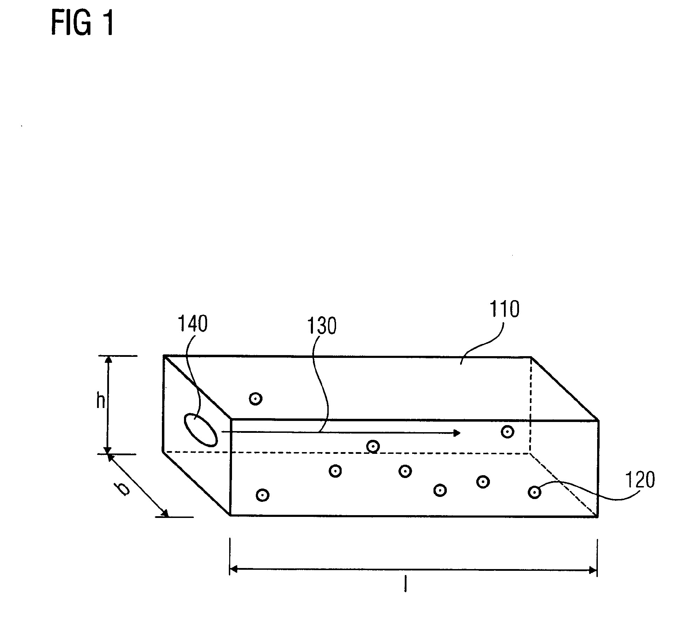

Fig. 1 zeigt eine Raumsicht des Wellenleiterkerns 110 der Hydrogel aufweist und als Immobilisierungsmatrix für Rezeptormoleküle 120 dient, wobei für das in der Fig. 1 gezeigten Ausführungsbeispiel eine Wellenausbreitungsrichtung 130 (= Richtung von durch dem Wellenleiterkern geführtem Licht) von links nach rechts erfolgt. Der Wellenleiterkern (110) kann auch ein Wellenleiter sein und im Folgenden werden beide Begriffe parallel genutzt. Der Wellenleiter 110 weist eine Länge 1 und einen senkrecht dazu stehenden Querschnitt mit einer kleinsten Ausdehnung h und einer größten Ausdehnung b auf. Die Form des Querschnitts ist in der Fig. 1 in Form eines Rechtecks oder Quadrats angegeben, wobei in weitren Ausführungsbeispielen die Form des Wellenleiters 110 variieren kann. Insbesondere ist es jedoch vorteilhaft, wenn die Länge des Wellenleiters 110 gemessen in der Wellenausbreitungsausrichtung 130 deutlich länger ist als die maximale Ausdehnung des Querschnitts. Damit kann beispielsweise sichergestellt werden, dass ein Lichtsignal, das an einer Eingangsseite 140 eingekoppelt wird (beispielsweise über einen Freistrahl oder einen Laser und optionalen Linsen/Spiegel), möglichst intensiv und über eine weite Strecke entlang des Wellenleiters 110 sich ausbreitet und somit mit möglichst vielen Rezeptormolekülen 120 potentiell in Wechselwirkung treten kann.

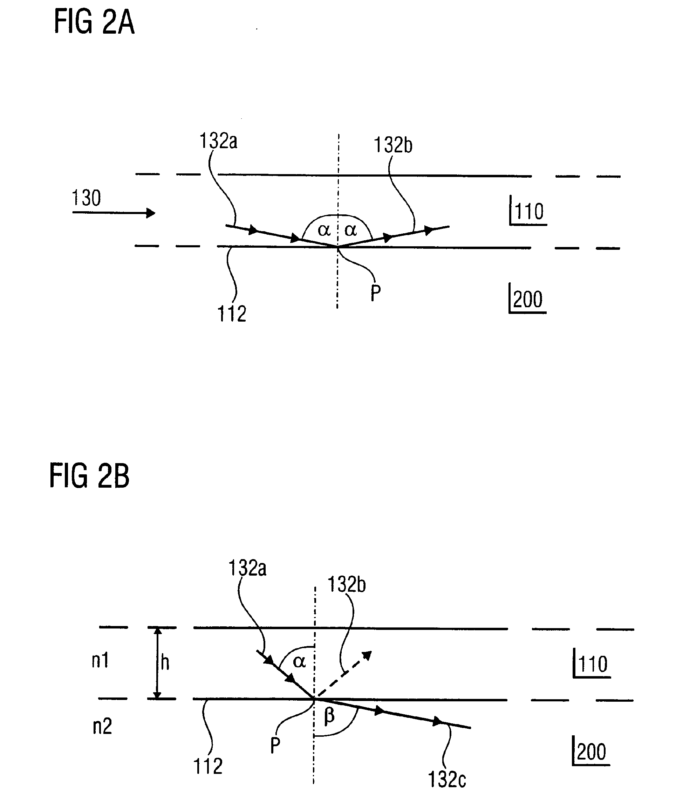

In den Fig. 2a und b sind Querschnittsansichten des Wellenleiters 110 gezeigt, der in einem Medium 200 eingebettet ist bzw. in Kontakt mit dem Medium 200 steht. Damit der Wellenleiter 110 ein einfallendes Lichtsignal oder allgemein eine einfallende elektromagnetische Strahlung entlang der Wellenausbreitungsrichtung 130 weiterleitet und die elektromagnetische Strahlung den Leiter nicht (durch eine Brechung) verlassen kann, werden vorzugsweise die Brechungsindizes derart gewählt, dass der Brechungsindex n1 des Wellenleiters 110 größer ist als der Brechungsindex n2 des Mediums 200. Das hat zur Folge, dass beispielsweise ein Lichtsignal 132a, das auf einen Rand 112 des Wellenleiters 110 in einem Einfallwinkel α (gemessen zur Flächennormale) an dem Rand 112 reflektiert wird, so dass ein reflektiertes Lichtsignal 132b, welches wiederum einen Ausfallwinkel α zur Flächennormale aufweist, weiterhin entlang des Wellenleiters 110 propagiert. Wenn der Brechungsindex n1 des Wellenleiters 110 kleiner wäre als der Brechungsindex n2 des umgebenden Mediums 200, wäre eine derartige Reflexion an dem Rand 112 unterdrückt und stattdessen würde das einfallende Lichtsignal 132a den Wellenleiter 110 an dem Punkt P verlassen. Das wäre jedoch nachteilig, da durch derartige Brechungen der Lichtstrahl stetig an Intensität verlieren würde und somit die Detektionssensitivität deutlich herabgesetzt werden würde.

Fig. 2b zeigt den Fall, wenn ein einfallendes Lichtsignal 132a auf den Punkt P in einem Einfallwinkel α trifft, der kleiner als ein Grenzwinkel ist, so dass zwar immer noch ein reflektiertes Ausgangssignal 132b erzeugt wird, jedoch ein gebrochener Anteil 132c den Wellenleiter 110 verlässt. Die Totalreflexion tritt für alle Winkel α auf, die größer sind als ein Grenzwinkel der jenem Winkel entspricht, wo das gebrochene Lichtsignal 132c sich entlang der Randkurve 112 ausbreiten würde. Der Grenzwinkel ist dabei über das Verhältnis der beiden Brechungsindizes n1, n2 gegeben. In Abhängigkeit der Brechungsindizes des Wellenleiters 110 und des Mediums 200 kann die kleinste Ausdehnung h nun derart gewählt werden, dass für ein Lichtsignal, welches sich im Wesentlichen entlang der Ausbreitungsrichtung 130 ausbreitet, auf dem Rand 112 des Wellenleiters 110 nur unter einem Winkel treffen kann, der eine Totalreflexion hervorruft. Eine derartige geometrische Wahl für den Wellenleiter 110 ist wichtig, um eine möglichst hohe Sensitivität des Biosensors zu erreichen, d.h., dass nur jenes Licht den Wellenleiter 110 verlassen kann, das beispielsweise in Folge von Fluoreszenz nahezu senkrecht auf den Rand 112 trifft.

Sofern der Brechungsindex des Wellenleiters 110 nahezu identisch mit dem Brechungsindex des Mediums 200 ist, kann beispielsweise ein zusätzlicher Mantel verwendet werden, der auf dem Wellenleiter 110 oder in einem gewissen Abstand von dem Rand 112 von dem Wellenleiter 110 angeordnet wird. Der Mantel weist vorzugsweise einen kleineren Brechungsindex auf als das Medium 200. Damit wird sichergestellt, dass eine elektromagnetische Strahlung, die sich entlang des Wellenleiters 110 ausbreitet und diesen verlässt, an dem Mantel total reflektiert wird und somit wiederum durch den Wellenleiter 110 hindurch geleitet wird und mit potentiellen Rezeptormolekülen 120 wechselwirken kann.

Der Austrittswinkel β lässt sich mit Hilfe der Brechungsindizes n1, n2 für den Wellenleiter 110 und für das Medium berechnen.

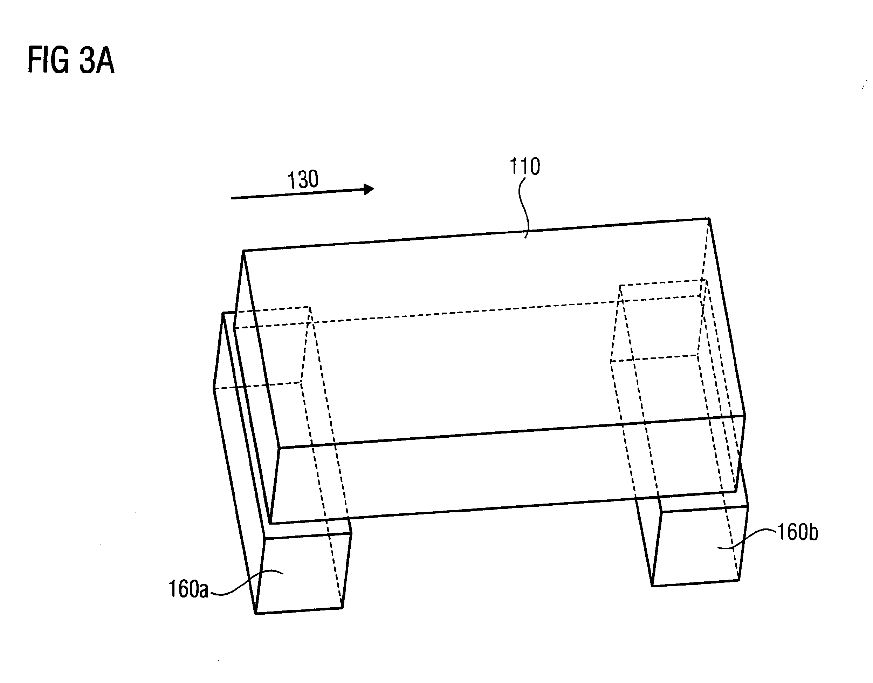

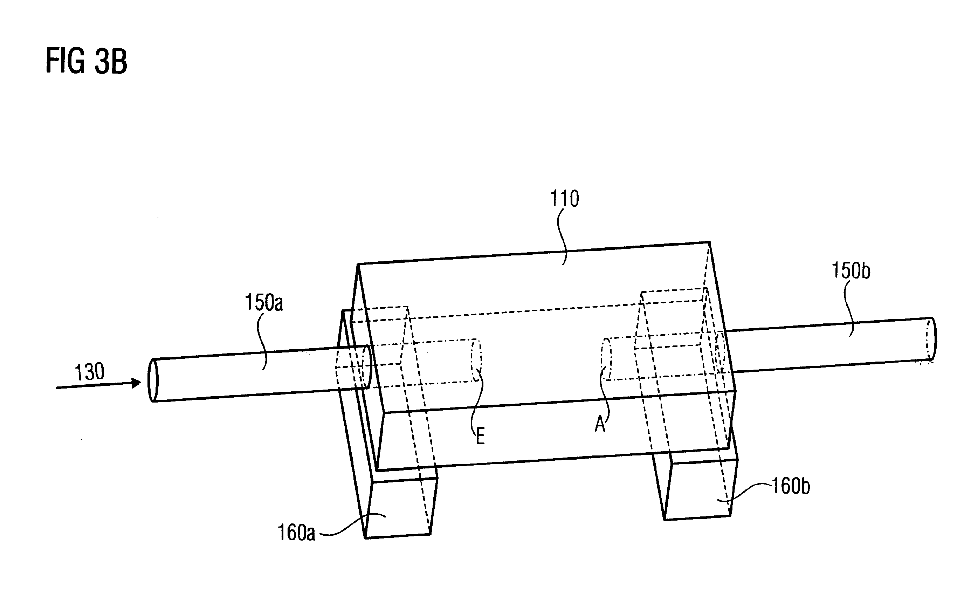

Fig. 3a und Fig. 3b zeigen weitere Raumansichten des Wellenleiters 110. Die Fig. 3a zeigt den Wellenleiter 110, der durch einen Träger 160 fixiert ist. Der Träger 160 weist einen ersten Teil 160a und einen zweiten Teil 160b auf, die beispielsweise jeweils an den beiden Enden entlang der Wellenausbreitungsrichtung 130 angeordnet sind. Es ist dabei vorteilhaft, dass die Kontaktfläche zwischen dem Träger 160 und dem Wellenleiter 110 möglichst klein gehalten ist, da die Kontaktfläche als eine Öffnung für die in dem Wellenleiter 110 eingeleitete elektromagnetische Strahlung wirkt.

Fig. 3b zeigt eine Raumansicht von dem Wellenleiter 110 und dem Träger 160 mit dem ersten und zweiten Teil 160a und 160b, wobei elektromagnetische Strahlung entlang der Wellenausbreitungsrichtung 130 durch ein Lichtleitkabel 150 in den Wellenleiter 110 einkoppelbar ist. Bei dem in Fig. 3b gezeigten Ausführungsbeispiel wird die elektromagnetische Strahlung durch ein erstes Lichtleitkabel 150a in den Wellenleiter 110 eingebracht und durch ein weiteres Lichtleitkabel 150b kann ein optisches Signal aus dem Wellenleiter 110 ausgekoppelt werden. Da die Kontaktfläche des Trägers 160 zu dem Wellenleiter 110 für die eintretende elektromagnetische Strahlung (oder Licht) als eine Öffnung wirkt (zumindest dann, wenn der Brechungsindex des Trägers 160 größer ist als der Brechungsindex des Wellenleiters 110), ist es sinnvoll, dass die elektromagnetische Strahlung durch das Lichtleitkabel 150a erst in einer Region E in den Wellenleiter 110 eingebracht wird, die in Wellenausbreitungsrichtung 130 hinter der Kontaktfläche zwischen dem ersten Teil des Trägers 160a und dem Wellenleiter 110 liegt. Damit ist sichergestellt, dass der Kontaktbereich zwischen dem ersten Teil des Trägers 160a und dem Wellenleiter 110 nicht durch das Lichtleitkabel 150a direkt beleuchtbar ist und höchstens durch Streuung Licht den Wellenleiter 110 an dieser Stelle verlassen kann. Ebenso ist es sinnvoll, dass sich das in dem Wellenleiter 110 ausgebreitete Lichtsignal bereits vor dem Erreichen des Kontaktbereichs zwischen dem zweiten Teil des Trägers 160b und dem Wellenleiter 110 durch das weitere Lichtleitkabel 150b in einer Ausgangsregion A aus dem Wellenleiter 110 ausgekoppelt wird. Damit ist sichergestellt, dass zwischen der Eingangsregion E und der Ausgangsregion A die Ausbreitung des optischen Signals von dem Lichtleitkabel 150a zu dem weiteren Lichtleitkabel 150b entlang des Wellenleiters 110 erfolgt, ohne dass in dem Zwischengebiet das optische Signal beispielsweise über einen Kontakt zu einem Träger 160 den Wellenleiter 110 verlassen kann und über Totalreflexion in dem Wellenleiter 110 verbleibt.

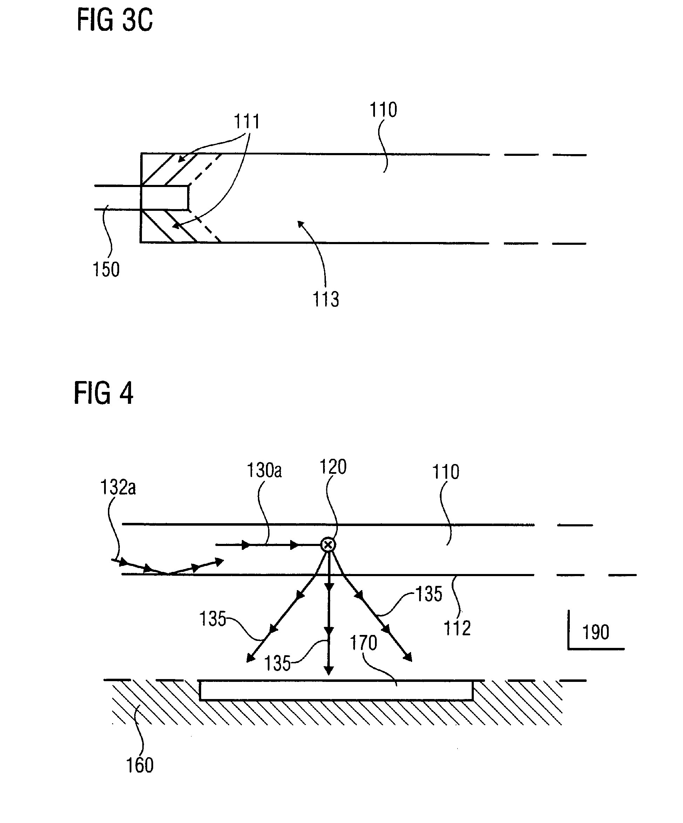

Fig. 3c zeigt eine Querschnittsansicht des Wellenleiters 110 und ein optionales Lichtleiterkabel 150, wobei das Lichtleitkabel 150 in den Wellenleiter 110 hineinragt, so dass ein direkt beleuchtbarer Teil 113 des Wellenleiters 110 durch Licht, das den Wellenleiter 110 passiert hat, ausgeleuchtet werden kann. Außerhalb des direkt beleuchtbaren Teils 113 ist ein Schattengebiet 111 ausgebildet, in das Licht nur durch eine Rückstreuung oder Reflexion gelangen kann. An dieses Schattengebiet 111 werden vorzugsweise die Träger 160 angeordnet. Das hier gezeigte Lichtleitkabel 150 kann sowohl das eingangseitige Lichtleitkabel 150a oder das weitere Lichtleitkabel 150b sein.

Fig. 4 zeigt ein Ausführungsbeispiel für einen Wellenleiter 110, der ferner einen Photodetektor 170 aufweist und der Photodetektor 170 zur Ausbreitungsrichtung 130 senkrecht versetzt zum Wellenleiter 110 angeordnet ist. Der Photodetektor 170 kann beispielsweise mit dem gleichen Träger 160 fixiert sein, der ebenfalls den Wellenleiter 110, wie in der Fig. 3 gezeigt, fixiert.

Entlang des Wellenleiters 110 breitet sich ein Lichtsignal 130a, das mit einem Rezeptormolekül 120 wechselwirkt, aus. Das Rezeptormolekül 120 kann beispielsweise mit einem Analytmolekül wechselwirken oder mit ihm chemisch verbunden sein. In Folge der Wechselwirkung des einfallenden Lichtstrahls 130a mit dem Rezeptormolekül 120 kann beispielsweise eine Fluoreszenz erfolgen, die bewirkt, dass das Rezeptormolekül 120 als eine Quelle für eine fluoreszierende Strahlung 135 wirkt. Die fluoreszierende Strahlung 135 breitet sich in alle Richtungen aus und insbesondere auch senkrecht zur Oberfläche 112 des Wellenleiters 110. Damit ist es möglich, dass das fluoreszierende Licht - im Gegensatz zu dem in dem Wellenleiter 110 sich ausbreitenden Licht 130, 132 - den Wellenleiter 110 verlassen kann. Eine Brechung entlang der Oberfläche 112 kann auftreten, verhindert jedoch nicht, dass die fluoreszierende Strahlung 135 den Wellenleiter 110 verlässt und sich in Richtung des Detektors 170 ausbreiten und dort, beispielsweise über Photodetektoren (Photodioden, Photothyristoren, etc.) detektiert werden kann. Da die Fluoreszenzstrahlung 135 im Vergleich zu der sich im Wellenleiter 110 ausbreitenden Strahlung 130 deutlich an Intensität geringer ist, ist es vorteilhaft, wie es in den Ausführungsbeispielen der vorliegenden Erfindung der Fall ist, dass der Wellenleiter 110 ein derartiges Material aufweist, das die in dem Wellenleiter 110 sich ausbreitenden Lichtsignale 130, 132 in Folge der Totalreflexion an dem Rand 112 in dem Wellenleiter 110 verbleiben und nur das fluoreszierende Licht 135 den Wellenleiter 110 verlassen kann.

Zwischen dem Wellenleiter 110 und dem Detektor 170 kann sich beispielsweise das Medium 200 befinden, es kann aber auch ein Spalt 190 beispielsweise aus Luft gebildet sein, sofern sichergestellt ist, dass der Spalt 190 zwischen dem Wellenleiter 110 und dem Detektor 170 einen Brechungsindex aufweist, der kleiner ist als der Brechungsindex des Wellenleiters 110.

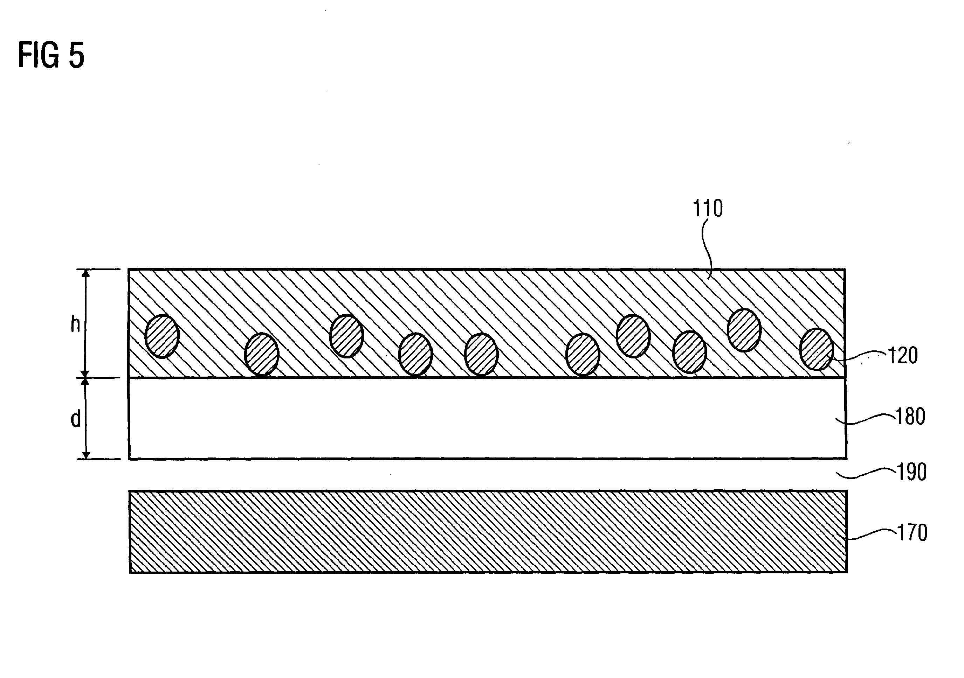

Fig. 5 zeigt ein weiteres Ausführungsbeispiel, bei dem der Wellenleiter 110 als eine Schicht auf einem transparenten Träger 180 angeordnet ist und der Wellenleiter 110 als Immobilisierungsmatrix für die Rezeptormoleküle 120 dient. Beispielsweise können als Rezeptormoleküle 120 Proteine verwendet werden, die Glucose binden, so dass eine Glucosesensorkammer erzeugt werden kann, wobei Hydrogel als ein Medium dient, in dem sich das Licht ausbreiten kann. Bei dem in Fig. 5 gezeigten Ausführungsbeispiel kann der Träger 180 beispielsweise ein Glas oder Silikatsubstrat aufweisen und, damit das Lichtsignal den Wellenleiter 110 und den Träger 180 nicht verlassen kann, kann wieder zwischen dem Träger 180 und dem Photodetektor 170 ein Spalt 190 ausgebildet sein, wobei der Spalt 190 vorzugsweise mit einem Medium gefüllt ist, das einen kleineren Brechungsindex aufweist als der Brechungsindex des Trägers 180 (wodurch wiederum eine Totalreflexion an der entsprechenden Übergangsfläche erreichbar ist).

Die Ausbreitungsrichtung des Lichtsignals kann bei dem in Fig. 5 gezeigten Ausführungsbeispiel z.B. von links nach rechts oder aber auch senkrecht zur Zeichenebene erfolgen. Wiederum ist der Photodetektor 170 senkrecht zur Ausbreitungsrichtung 130 des Lichtsignals angeordnet, so dass der Photodetektor 170 insbesondere sensitiv für Fluoreszenzlicht bzw. ein anderes Licht senkrecht zur Ausbreitungsrichtung 130 ausbreitende Lichtsignal ist.

Das Ausführungsbeispiel, welches in Fig. 5 gezeigt ist, bietet somit die Möglichkeit den Photodetektor 170 derart zu positionieren, dass er insbesondere zur Analyse von Streu- und Fluoreszenzlicht geeignet ist. Da nur ein sehr geringer Teil von dem beispielhaften Fluoreszenzlicht im Hydrogel geleitet wird, ist diese Anordnung bevorzugt bei der Messung von Fluoreszenz oder/und FRET. Die Detektion von dem beispielhaften Fluoreszenzlicht erfolgt beispielsweise senkrecht zum Strahlengang des Lichts im Wellenleiter 110. Eine analoge Anordnung für den Photodetektor 170 ist ebenfalls für den in Fig. 3a und 3b gezeigten Wellenleiter 110 möglich. Der Träger 180 sollte dabei so dünn wie möglich gewählt sein und bevorzugt eine Dicke d aufweisen, die kleiner ist als 500 µm oder kleiner ist als 200 µm oder zwischen 5 µm und 100 µm liegt. Die Hydrogelschicht des Wellenleiters 110 kann beispielsweise eine Höhe h aufweisen, die in einem Beeich zwischen 5 µm und 5000 µm oder in einem Bereich zwischen 10µm und 1000 µm liegt.

Bei der Anordnung des Photodetektors 170 spielt es dabei keine Rolle, ob der Photodetektor 170 oberhalb, unterhalb oder rechts oder links des Hydrogel-Wellenleiters 110 angeordnet ist. Für eine Messaufgabe (beispielsweise der Transmission) kann es jedoch vorteilhaft sein, einen weiteren Photodetektor ebenfalls an das Ende des Hydrogel-Wellenleiters 110 anzuordnen. Er wird dann in Position des weiteren Lichtleitkabels 150b in der Fig. 3b eingesetzt.

Bei weiteren Ausführungsbeispielen können ebenfalls Rückstreumessungen vorgenommen werden, wobei das Lichtleitkabel 150a in der Fig. 3b zum Sammeln von z.B. Fluoreszenzlicht oder Streulicht verwendet werden kann und dieses dann an einen Detektor weitergeleitet wird. Dabei kann das Lichtleitkabel 150a beispielsweise mehrere Fasern aufweisen, wobei ein erster Teil der Fasern der Zuführung von Licht und ein zweiter Teil der Fasern der Fassung des Streulichts dient.

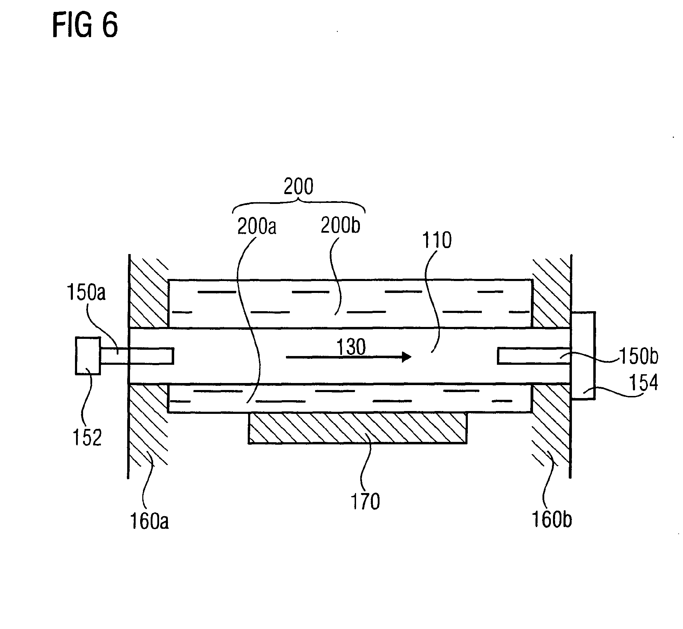

Fig. 6 zeigt ein Ausführungsbeispiel für einen Biosensor, der einen Wellenleiter 110 aufweist, der in Kontakt zu dem Medium 200 ist, wobei der Wellenleiter 110 über ein Lichtleitkabel 150a mit einer Lichtquelle 152 (z.B. einen Laser) optisch verbunden ist und der Wellenleiter 110 ferner über ein weiteres Lichtleitkabel 150b mit einer Einrichtung 154 zum Erfassen eines Lichtsignals (weiterer Photodetektor) optisch verbunden ist. Ferner weist der Biosensor einen Träger 160 auf, der zum einen den Wellenleiter 110 fixiert und optional einen Behälter bilden kann, in dem das Medium 200 einbringbar ist und darüber hinaus den Photodetektor 170 fixiert. Der Photodetektor 170 ist in dem Ausführungsbeispiel in der Fig. 6 wiederum senkrecht zur Ausbreitungsrichtung des Lichtsignals 130 angeordnet, so dass der Photodetektor 170 insbesondere ein durch ein Fluoreszenz erzeugtes Licht in dem Wellenleiter 110 detektieren kann. Ferner kann der weitere Photodetektor 154 das Lichtsignal 130 in Transmission messen, wodurch insbesondere eine mögliche Absorption in Folge der Analytkonzentration oder aber eine fehlende Absorption in Folge der Analytkonzentration in dem Medium 200 feststellbar ist.

Das Medium 200 kann dabei beispielsweise beidseitig dem Wellenleiter 110 angeordnet sein, so dass wie in der Querschnittsansicht der Fig. 6 sichtbar ist, das Medium einen ersten Anteil 200a und einen zweiten Anteil 200b aufweist. Bei weiteren Ausführungsbeispielen kann der Wellenleiter 110 ebenfalls an einer Seitenwand oder an einem Boden oder Deckel des Behälters angeordnet sein, so dass der Wellenleiter 110 nur mit einer Seitenfläche in Kontakt zu dem Medium 200 steht. Der erste oder zweite Anteil 200a, 200b können demgemäß abwesen sein oder durch einen Spalt ersetzt sein. Es ist ebenfalls möglich, dass das Medium 200 sich entlang eines Kanals oder eines Mikrokanals ausbreitet und der Wellenleiter 110 senkrecht zur Flussrichtung des Mikrokanals angeordnet sein kann oder ein Randbereich des Mikrokanals bilden kann.

Bei weiteren Ausführungsbeispielen ist es ebenfalls möglich, dass der Biosensor direkt implantiert wird, so dass kein gesonderter Behälter für das Medium 200 erforderlich ist und nur ein direkter Kontakt mit der zu untersuchenden Körperflüssigkeit (beispielsweise dem interzellularen Serum) sichergestellt wird. Das kann beispielsweise dazu benutzt werden, um eine ständige Überwachung eines Glucosewertes zu gewährleisten.

Das Hydrogel kann beispielsweise Silikat oder Polyacrylarmid oder Alginat aufweisen. Die biologischen Rezeptoren oder Rezeptormoleküle 120 sowie eventuell erforderliche fluoreszierende Stoffe werden bei der Gelsynthese mit eingebracht (d.h. bei der Herstellung des Hydrogels). Das Hydrogel kann in eine beliebigen Form gebracht werden, so dass Quader- oder Zylinderformen für Anwendungen zur Verfügung stehen. Die Größe der Gele kann in einem Bereich von 10 µm bis 20 mm oder zwischen 50 µm oder 10 mm oder zwischen 500 µm und 5 mm in der Höhe (bzw. Durchmesser) und bzgl. einer Länge oder Breite von 1 mm bis 100 mm oder von 5 bis 50 mm variieren. In diese Gelstücke können die Lichtleitkabel 150 nach der Synthese eingeschoben werden. Über die Lichtleitkabel 150 kann beispielsweise das Anregungslicht für die Fluoreszenzstoffe eingekoppelt werden. Die gesamte Anordnung kann dann in einer Flüssigkeit 200 gehalten werden, die den Analyt enthält. Der Analyt diffundiert in das Gel ein und reagiert dort mit den immobilisierten Stoffen (Rezeptormoleküle). Das für die chemische Reaktion spezifische Fluoreszenzlicht wird in 90° Anordnung zum Anregungslicht aufgenommen.

Zur Kopplung zwischen Glasfaser und Wellenleiter sind noch andere Kopplungsmethoden denkbar. Die Glasfaser kann z.B. auf die Eingangsseite aufgesetzt werden, oder einen geringen Abstand (< 1 mm) zur Eingangsseite aufweisen. Zudem ist Kopplung durch Strahlformung, d.h. mit Hilfe einer in einem gewissen Abstand von der Eingangsseite angebrachten (Mikro)Linse, möglich. Bei Einsatz eines Lasers als Lichtquelle (geringe Strahldivergenz) kann evtl. auch ganz auf den Einsatz von Fasern oder Linsen verzichtet werden.

Bei weiteren Ausführungsbeispielen kann in das Gel (Hydrogel) ein weiteres Lichtleitkabel 150b eingeschoben werden, so dass das weitere Lichtleitkabel 150b ebenfalls mit einem weiteren Photodetektor 154 gekoppelt sein kann und somit ein Sensorsignal empfangen kann.

Abmessungen für den Querschnitt des Wellenleiters 110 oder des Wellenleiterkerns liegen typischerweise in der Größenordnung zwischen 10 µm und einigen mm, die Länge des Hydrogel-Wellenleiters 110 liegt vorzugsweise in einem Bereich zwischen 1 mm bis einigen cm.

Somit beschreiben Ausführungsbeispiele der vorliegenden Erfindung einen optischen Biosensor, der eine über konventionelle Lösung deutlich hinaus gehende Kopplungseffizienz zwischen den Rezeptormolekülen 120 und dem Transducer oder dem Wellenleiter 110 ermöglicht.

Ausführungsbeispiele umfassen somit insbesondere auch optischer Wellenleiter, dessen Kernmaterial Hydrogel aufweist, welches als Immobilisierungsmatrix, in die Rezeptormoleküle eingebettet sind, dient. Die Wellenleitereigenschaft ermöglicht es insbesondere, dass - im Gegensatz zu konventionellen Verfahren - eine maximale Anzahl von Rezeptormolekülen für die Detektion zur Verfügung stehen.

Als Lichtquelle kann beispielsweise blaues Licht im spektralen Bereich zwischen ungefähr 400 und circa 440 nm verwendet werden, für die beispielsweise blaue Laser Dioden genutzt werden können. Dioden sind vorteilhaft, da sie sehr klein herstellbar und darüber hinaus sehr energieeffizient sind. Insbesondere für implantierbare Biosensoren ist dies sehr wichtig.

Die implantierten Biosensoren können optional ferner eine Drahtlosschnittstelle aufweisen, so dass Daten (z.B. Glukosekonzentration) an eine externe Auswerteeinheit übermittelt werden können. Die externe Auswerteeinheit kann beispielsweise ein Mobiltelefon, PDA, oder ähnliches aufweisen und kann außerdem die Daten (optional) an einen Arzt weiterleiten. Dadurch ist eine permanente Überwachung der beispielhaften Glukosekonzentration möglich. Optional ist es ferner möglich, den Biosensor mit eine Einrichtung zur injizieren eines Medikamentes zu koppeln, so dass bei einer Verletzung eines Grenzwertes automatische (medikamentöse) Gegenmaßnahmen ergriffen werden können. Bei weiteren Ausführungsbeispielen können jedoch auch andere Konzentrationen automatisch überwacht werden, die Glukosekonzentration ist nur ein Beispiel. Für derartige medizinischen Anwendungen ist es insbesondere vorteilhaft, dass Hydrogele biologisch sehr gut verträglich sind.

Bei weiteren Ausführungsbeispielen für den Wellenleiterkern 110 ist die Länge 1 des Wellenleiters 110 in einem Bereich zwischen 1 mm und 100 mm oder zwischen 5 mm und 50 mm oder der Querschnitt des Wellenleiterkerns 110 weist eine quadratische oder eine rechteckige oder eine runde Form auf. Bei weiteren Ausführungsbeispielen für den Wellenleiterkern 110 ist der Träger senkrecht zur Hauptoberfläche und weist eine Dicke auf, wobei die Dicke in einem Bereich zwischen 1 µm und 500 µm oder zwischen 5 µm und 100 µm liegt. Das Hydrogel des Wellenleiterkerns 110 kann ebenfalls als eine Schicht auf dem transparenten Träger 180 ausgebildet sein und die Schicht kann eine Schichtdicke, die zwischen 10 µm und 1000 µm liegt, aufweisen. Ausführungsbeispiele umfassen ebenfalls einen Wellenleiter, wobei der Wellenleitermantel ein weiteres Hydrogel aufweist.

Der optischen Sensor gemäß weiterer Ausführungsbeispiele umfasst ferner eine Einrichtung zum Einkoppeln von elektromagnetischer Strahlung in den Wellenleiterkern 110 oder die Einrichtung zum Erfassen ist ausgebildet, ein Fluoreszenzlicht, das in dem Hydrogel bei Kontakt zu einem Medium 200 erzeugt wird, zu erfassen.

Die Wellenleiteranordnung gemäß weiterer Ausführungsbeispiele weist ferner einen Photodetektor 170 auf und der Photodetektor 170 ist angeordnet, um eine von der Wellenleiteranordnung geführte oder eine die Wellenleiteranordnung seitlich durch einen Rand 112 verlassende elektromagnetische Strahlung zu detektieren.

Das Verfahren nach weiteren Ausführungsbeispielen umfasst ferner den Schritt eines Einkoppelns von elektromagnetischer Strahlung in den Wellenleiterkern 110 oder der Schritt des Erfassens von elektromagnetischer Strahlung wird derart ausgeführt, dass die erfasste elektromagnetische Strahlung den Wellenleiterkern 110 senkrecht zu einer Hauptwellenausbreitungsrichtung 130 verlässt.

## Patentansprüche

1. Wellenleiterkern (110) aus Hydrogel, das als Immobilisierungsmatrix, in die Rezeptormoleküle (120) eingebettet sind, dient.

2. Wellenleiterkern (110) nach Anspruch 1, der eine Länge (1) und einen Querschnitt aufweist, wobei der Querschnitt eine kleinste Ausdehnung, die mindestens dreimal kleiner als die Länge (1) ist, aufweist.

3. Wellenleiterkern (110) nach Anspruch 2, wobei der Querschnitt eine größte Ausdehnung (b) und eine kleinste Ausdehnung (h) aufweist, wobei die größte Ausdehnung (b) und kleinste Ausdehnung (h) in einem Bereich zwischen 10 µm und 20 mm oder zwischen 50 µm und 10 mm oder zwischen 0,5 mm und 5 mm liegen.

4. Wellenleiterkern (110) nach einem der Ansprüche 1 bis 3, der ferner einen transparenten Träger (180) aufweist, wobei das Hydrogel auf einer Hauptoberfläche des transparenten Trägers (180) angeordnet ist.

5. Wellenleiterkern (110) nach einem der vorhergehenden Ansprüche, bei dem das Hydrogel ein Silikat oder ein Polyacrylamid oder ein Alginat aufweist.

6. Wellenleiteranordnung mit:
einem Wellenleiterkern (110) nach einem der Ansprüche 1 bis 5, der eine Eingangsseite (140) aufweist; und
einem Lichtleitkabel (150),
wobei das Lichtleitkabel (150) in die Eingangsseite (140) des Wellenleiterkerns (110) hineinragt oder auf die Eingangsseite (140) aufgesetzt ist oder über eine Linse mit der Eingangsseite (140) optisch gekoppelt ist.

7. Wellenleiteranordnung nach Anspruch 6, wobei der Wellenleiterkern (110) einen durch das Lichtleitkabel (150) direkt beleuchtbaren Teil (113) und einen Träger (160) aufweist, wobei der Träger (160) außerhalb des direkt beleuchtbaren Teils (113) angeordnet ist.

8. Wellenleiteranordnung nach Anspruch 6 oder Anspruch 7, der ferner ein weiteres Lichtleitkabel (150b) aufweist, wobei das weitere Lichtleitkabel (150b) in das Hydrogel hineinragt oder auf Hydrogel aufgesetzt ist oder über eine Linse mit dem Hydrogel optisch gekoppelt ist, so dass das Lichtleitkabel (150) und das weitere Lichtleitkabel (150b) über das Hydrogel optisch gekoppelt sind.

9. Wellenleiter mit:
einem Wellenleiterkern (110) nach einem der Ansprüche 1 bis 5; und
einem Wellenleitermantel, wobei der Wellenleitermantel einen kleineren Brechungsindex aufweist als ein Brechungsindex des Wellenleiterkerns (110).

10. Optischer Sensor mit:
einem Wellenleiterkern (110) nach einem der Ansprüche 1 bis 5 oder einer Wellenleiteranordnung nach einem der Ansprüche 6 bis 8 oder einem Wellenleiter nach Anspruch 9; und
einer Einrichtung zum Erfassen einer elektromagnetischen Strahlung, die den Wellenleiterkern (110) verlässt.

11. Optischer Sensor nach Anspruch 10, der ferner einen Behälter zur Aufnahme eines Mediums (200) aufweist, so dass das Medium (200) den Wellenleiterkern (110) kontaktiert und das Hydrogel ausgebildet ist, dass es einen größeren Brechungsindex aufweist als ein Brechungsindex des Mediums in dem Behälter.

12. Optischer Sensor nach einem der Ansprüche 10 bis 11, bei dem die Einrichtung zum Erfassen derart ausgebildet ist, dass eine den Wellenleiterkern oder der Wellenleiteranordnung oder den Wellenleiter seitlich durch einen Rand (112) verlassende Strahlung erfassbar ist.

13. Optischer Sensor nach einem der Ansprüche 10 bis 12, der ferner eine Auswerteeinheit aufweist und die Auswerteeinheit ausgebildet ist, aus einer durch die Einrichtung zum Erfassen festgestellten elektromagnetischen Strahlung eine Analytkonzentration in einem Medium (200), das in Kontakt zu dem Wellenleiterkern (110) ist, zu ermitteln.

14. Optischer Sensor nach Anspruch 13, bei dem die Rezeptormoleküle (120) ausgebildet sind, Glucose zu binden, so dass eine Glucosekonzentration in dem Medium (200) feststellbar ist.

15. Verfahren zum Detektieren eines Analyten in einem Medium (200) mit:
Kontaktieren eines Wellenleiterkerns (110) mit dem Medium, wobei der Wellenleiterkern (110) Hydrogel aufweist und das Hydrogel als Immobilisierungsmatrix, in die Rezeptormoleküle (120) eingebettet sind, dient;
Erfassen von elektromagnetischer Strahlung, die den Wellenleiterkern (110) verlässt; und
Bestimmen einer Analytkonzentration in dem Medium (200) aus einem Spektrum oder aus einer Intensität der erfassten elektromagnetischen Strahlung.
